(19) Europäisches Patentamt
European Patent Office
Office européen des brevets

(11) Veröffentlichungsnummer: **0 340 567 B1**

(12) **EUROPÄISCHE PATENTSCHRIFT**

(45) Veröffentlichungstag der Patentschrift:
02.05.91 Patentblatt 91/18

(51) Int. Cl.⁵: **C02F 3/28**, C02F 3/34, C02F 3/30

(21) Anmeldenummer: 89107232.4

(22) Anmeldetag: 21.04.89

(54) Verfahren zum biologischen Abbau von komplexen, langsam abbaubaren organischen Abwasserinhaltsstoffen.

(30) Priorität: 04.05.88 DE 3815123

(43) Veröffentlichungstag der Anmeldung:
08.11.89 Patentblatt 89/45

(45) Bekanntmachung des Hinweises auf die Patenterteilung:
02.05.91 Patentblatt 91/18

(84) Benannte Vertragsstaaten:
AT BE CH DE ES FR GB IT LI NL SE

(56) Entgegenhaltungen:
EP-A- 0 150 747
EP-A- 0 299 369

(56) Entgegenhaltungen:
CHEMICAL ABSTRACTS, Band 110, Nr. 10, 6. März 1989, Seiten 414-415, Nr. 81852u, Columbus, Ohio, US; M. GLANCER et al.: "Anaerobic treatment of chemically hazardous wastewaters", & ANAEROBIC DIG., PROC. INT. SYMP. 1988, 465-70, Ed. E.R. HALL et al., Oxford, GB
IDEM
BIOTECHNOLOGY & BIOENGINEERING, Band 30, Nr. 9, 20. Dezember 1987, Seiten 1077-1083, John Wiley & Sons, Inc., New York, US; L.Z. HU et al.: "Anoxic biofilm degradation of monocyclic aromatic compounds"

(73) Patentinhaber: BAYER AG
W-5090 Leverkusen 1 Bayerwerk (DE)

(72) Erfinder: Glanser, Margarete, Prof. Dr.
Brozova 14
YU-41000 Zagreb (YU)
Erfinder: Ban, Sinisa, Prof. Dr.
Bjankinijeva 5
YU-41000 Zagreb (YU)
Erfinder: Pascik, Imre, Dr.
Wilmersdorfer Strasse 6
W-4019 Monheim (DE)

## Beschreibung

Gegenstand der Erfindung ist der Bioabbau von komplexen, langsam abbaubaren organischen Abwasserinhaltsstoffen. Abwasserströme dieser Art kommen sowohl in den Grundstoffindustrien, wie z.B. Sägewerken und Zellstoffindustrie, vor, aber auch in den verarbeitenden Industrien, wie z.B. Chemiewerken, Textilindustrie, Lackiereien, Gerbereien usw. Diese Abwässer enthalten meistens eine ganze Palette sehr unterschiedlich aufgebauter Organica, zum Teil auch deren Dimere, Trimere, Oligomere bzw. Kondensationsprodukte, die sich dadurch auch in ihrer Bioabbaubarkeit wesentlich unterscheiden.

Zu diesen Abwasserströmen zählen z.B. auch die Bleichereiabwässer aus der Zellstoffherstellung. Weiterhin gehören hierzu auch die Spülwässer aus Lackiereien, die eine Vielzahl von sowohl gut abbaubaren als auch langsam abbaubaren Komponenten enthalten. Derzeit sind kaum wirksame, leistungsfähige biologische Verfahren zur Lösung dieser Probleme bekannt.

Die anaeroben Bakterien zeigen zwar relativ gute Aktivitäten der Aromaten auf, sind aber sehr anfällig auf qualitative Abwasserschwankungen, auf inhibierende Stöße und haben außerdem eine sehr geringe Wachstumsrate, so daß bei Betriebsstörungen es sehr lange dauern kann, bis die volle Leistung der Anlage wieder erreicht werden kann.

Gemäß DE 3 046 686 wird die Rückhaltung der Biomasse und die Abpufferung toxischer Stöße durch Immobilisierung auf synthetischen und natürlichen Trägern erreicht. Ein Schutz vor Betriebsstörungen der obengenannten Art ist damit jedoch nicht gewährleistet.

Gemäß gmf-Wasser/Abwasser, Nr. 126 (1985) 2, Seite 81-87 (Heijnen und Mitarbeiter), wird eine höhere Prozeßstabilität bei der anaeroben Behandlung komplexer Fermentationsabwässer aus der Hefeherstellung durch die zweistufige anaerobe Behandlung mit trägergebundenen Organismen erreicht. Hierbei handelt es sich jedoch um relativ gut abbaubare Abwasserinhaltsstoffe.

Zweistufige anaerobe Verfahren sind prinzipiell für die Behandlung der obengenannten komplexen Abwasserströme geeignet. B. Rosen und L. Gunarsson berichten z.B. (H.I.T. 85, Symposium über anaerobe Behandlung von Industrieabwässern, Hannover 03.10. bis 04.10.1985) über die zweistufige anaerobe Behandlung von Abwässern der Zellstoffherstellung nach dem chemisch-thermomechanischen Verfahren (CTMP-Chemical thermomechanical pulp), wobei trotz der Zweistufigkeit manchmal mit für die Anaerobiern toxischen Stößen zu rechnen ist, was bei diesem Verfahren mit Entgiftung durch Vermischung mit aerobem Überschußschlamm verhindert werden soll.

Das Problem beim zweistufigen anaeroben Verfahren liegt vor allem darin, daß durch Schädigung der hydrolytischen und acidogenen Biomasse in der ersten Stufe auch die zweite, besonders empfindliche methanogene Biomasse, stark geschädigt wird, was bedingt durch die langen Generationszeiten dieser Organismen zu sehr lange andauernden Regenerations- bzw. Ausfallzeiten der Kläranlage führt.

Es wurde überraschend gefunden, daß man diesen Nachteil der zweistufigen Behandlung vermeiden kann, wenn das zu behandelnde Abwasser in der ersten Stufe neben den acidogenen Organismen mit dehalogenierenden und/oder desulfonierenden und/oder desaminierenden Stämmen angereichert wird und in der gleichen Stufe, bezogen auf die organische Kohlenstoffbelastung, stark unterstöchiometrische Mengen Sauerstoff direkt oder indirekt durch Zugabe Sauerstoff-abspaltender Verbindungen zudosiert werden und in der 2. Stufe in Gegenwart einer methanogene Organismen enthaltenden Biomasse in bekannter Weise ein anaerober Abbau erfolgt. Das Verfahren nach der Erfindung besteht also im wesentlichen darin, daß das zu reinigende Abwasser in der ersten Stufe anoxisch/semiaerob behandelt wird, während in der zweiten Stufe unter streng anaeroben Bedingungen in Gegenwart von methanogenen, gegebenenfalls auf Trägerkörpern fixierten Mikroorganismen, gearbeitet wird.

Besonders gut läßt sich das erfindungsgemäße Verfahren realisieren, wenn die beiden Stufen als Wirbelbettverfahren unter Verwendung von Trägerkörpern zur Immobilisierung der Biomasse betrieben werden. Als Trägerkörper verwendet man dabei vorzugsweise stückige Polyurethanmassen, die als Füllstoff reaktiv und abriebfest gebundenes Kohlepulver enthalten.

Vorteilhaft wird das erfindungsgemäße Verfahren in der Weise durchgeführt, daß die Sauerstoffkonzentration in der ersten Stufe im Bereich zwischen 0,01 bis 1,2 mg/l, vorzugsweise zwischen 0,02 bis 1 mg/l und besonders bevorzugt zwischen 0,05 bis 0,8 mg/l, liegt.

Der pH-Wert in der ersten Stufe wird zweckmäßig zwischen 2,5 und 7,5, vorzugsweise zwischen 3,0 und 6,8 und besonders bevorzugt zwischen 4,0 und 6,5 eingestellt.

Mit der Erfindung werden folgende Vorteile erzielt:

– Bei Problemabwässern mit komplexen, langsam abbaubaren Abwasserinhaltsstoffen können mit dem erfindungsgemäßen Verfahren grundsätzlich höhere Abbauraten erreicht werden als bei einem rein anaeroben zweistufigen Verfahren.

– Durch die semiaerobe Prozeßführung wird in der ersten Stufe das Wachstum von obligat anaeroben

2

Mikroorganismen unterdrückt. Damit wird das Verfahren relativ unempfindlich gegenüber zufällig auftretenden Sauerstoffstößen in der ersten Stufe. Daraus resultiert eine höhere Prozeßstabilität sowohl gegenüber einem einstufigen als auch gegenüber einem zweistufigen rein anaeroben Verfahren.

– Die CSB-Elimination und die Elimination von organischen Chlorverbindungen (AOX) sind höher als beim einstufigen und auch zweistufigen anaeroben Verfahren.

– Eine $H_2S$-Vergiftung der zweiten Stufe kann vermieden werden, da in der ersten Stufe Schwefelionen in Elementarschwefel umgewandelt werden.

Mit der Erfindung wird also die Aufgabe, das anaerobe Abwasserreinigungsverfahren gegenüber inhibierend wirkenden betriebsbedingten Sauerstoffstößen unempfindlich zu machen, in zufriedenstellender Weise gelöst. Daraus resultieren eine wesentlich größere Zuverlässigkeit und damit eine prinzipielle Verbesserung des anaeroben Abbaus in der Hauptstufe (Methanstufe).

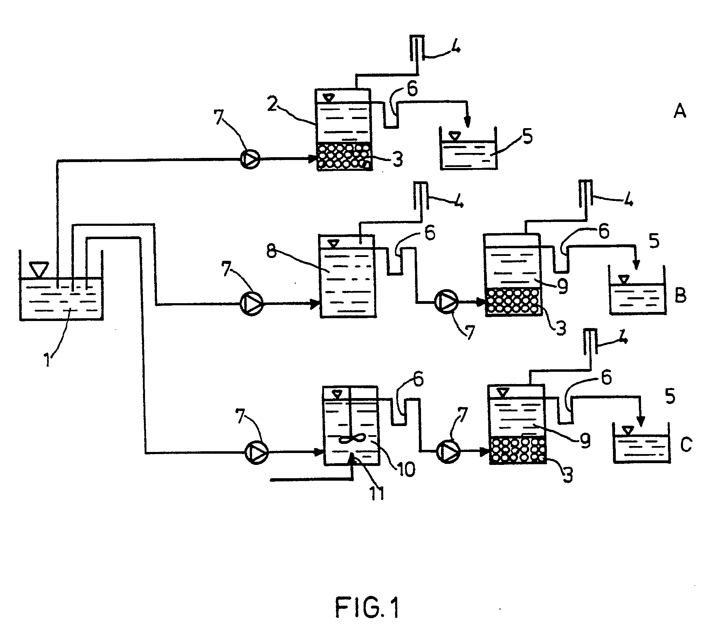

Im folgenden wird die Erfindung anhand von Vergleichsversuchen erläutert. Mit Hilfe der in der Zeichnung schematisch dargestellten Versuchsanlage wurde das erfindungsgemäße Verfahren (Anlage C) mit einem einstufigen (Anlage A) und einem zweistufigen aeroben Verfahren (Anlagen B) verglichen. Die Ergebnisse sind in der nachfolgenden Tabelle zusammengefaßt.

Gemäß der Zeichnung werden die drei Anlagen A, B, C von einem gemeinsamen Abwasserbehälter 1 gespeist. Die Anlage A für das einstufige Anaerobverfahren besteht aus dem Anaerobreaktor 2 mit einer Trägerkörperschüttung 3, einer Gasmeßvorrichtung 4 und einem Ablaufbecken 5, das über ein Siphon 6 mit dem Anaerobreaktor in Verbindung steht. Dem Anaerobreaktor 2 wird das zu behandelnde Abwasser durch die Pumpe 7 am Boden des Reaktors zugeführt.

Das Volumen des Anaerobreaktors betrug 4,0 l. Er enthielt 1.000 ml einer Schüttung von stückigen Trägerkörpern aus modifizierten Polyurethanmassen, die als Füllstoff reaktiv und abriebfest gebundenes Kohlepulver enthielten. Solche kohlemodifizierten PUR-Schaumstoffträgerkörper werden im Prinzip dadurch hergestellt, daß man NCO-Prepolymere mit einer weit überstöchiometrischen Menge an Wasser in Gegenwart von zerkleinerten, vorgefertigten PU-Schaumstoffen und Kohlepulver umsetzt. Diese Trägerkörpermassen sind herstellungsbedingt stark gequollen, besitzen eine sehr hohe Wasseraufnahmefähigkeit und bilden eine ideale Trägermatrix für die Ansiedlung von Mikroorganismen im wäßrigen Milieu. Hinsichtlich technischer Details wird auf das Europäische Patent EP 151 937 verwiesen.

Um definierte Startbedingungen für das Abwasserreinigungsverfahren zu gewährleisten, wurde das zu behandelnde, bereits acidogene Mikroorganismen enthaltende Abwasser mit dehalogenierenden und/oder desulfonierenden und/oder desaminierenden Stämmen angereichert. Die Anreicherung geschah in der Weise, daß diese Stämme in einem separaten Schritt durch Kontaktierung von Biomasse mit Substraten, die die obengenannten Verbindungsgruppen als Hauptkohlenstoffquelle enthielten, gezielt gezüchtet wurden. Wesentlich ist dabei, daß eine stabile Mischkultur herangezüchtet wird, die bei Verfahrensbeginn zugrunde gelegt wird.

Die Menge der dem zu behandelnden Abwasser im Anaerobreaktor 2 zugeführten PUR-Trägerkörper entsprach einem Trockensubstanzgehalt von 85 g TS/l Suspension. Das Abwasser wurde am Boden des Reaktors mit einer so hohen Strömungsgeschwindigkeit eingepumpt, daß die PUR-Trägerkörper aufgewirbelt werden und im Reaktor freischwebend in einer Wirbelschicht gehalten werden (turbulente und zirkulierende Strömungen). Derartige Wirbelschichtreaktoren sind in der Abwassertechnik bekannt und werden z.B. in der Monographie von P.F. Cooper, B. Atkinson ; Biological Fluidised Bed Treatment of Water and Wastewater ; Ellis Horwood Ltd. ; Chichester 1981, ausführlich behandelt. Auch bei den nachfolgend erläuterten Anlagen B und C werden solche Wirbelschichtreaktoren eingesetzt.

Bei der Anlage B handelt es sich um eine zweistufige Anaerobanlage nach dem Stand der Technik. Sie bestand aus zwei hintereinandergeschalteten Anaerobreaktoren 8 und 9 mit einem Volumen von jeweils 2,0 l. Die Abwasserzufuhr erfolgt wieder über Pumpen 7 jeweils am Boden der Reaktoren 8 und 9. Der Methanreaktor 9 enthielt 400 ml der im Beispiel A beschriebenen PUR-Trägerkörper. Im übrigen sind genau wie bei der nachfolgend beschriebenen Anlage C gleiche Bauteile mit gleichen Ziffern numeriert.

Mit der Anlage C wurde das erfindungsgemäße Verfahren durchgeführt. Die erste Stufe ist hier als Semi-Anaerobreaktor 10 mit einer Gasfritte 11 am Boden des Reaktors für die Zuführung geringer Mengen Sauerstoff bzw. Luft ausgebildet. Der Sauerstoffeintrag betrug z.B. 0,6 mg/l. Der Reaktorinhalt hatte dabei einen pH-Wert von 6,6 bis 6,9. Das im Reaktor 10 vorbehandelte Abwasser wurde über den Überlauf und den Siphon 6 mittels der Pumpe 7 dem Methanreaktor 9 zugeführt, der in gleicher Weise ausgeführt ist wie bei der Anlage B. Beide Reaktoren 9 und 10 haben wieder ein Volumen von 2 l.

Alle Reaktoren wurden mit einer dehalognierenden, anaeroben Biomasse in Form einer 15%igen Suspension (bezogen auf das Volumen) gefüllt. Diese Biomasse wurde durch eine mit Hilfe der Anreicherungsmethode erzielte Adaptierung auf ein aus einer Sulfitzellstoffproduktionsanlage stammendes Mischabwasser gewonnen. Sodann wurden die Reaktoren parallel unter den gleichen CSB-Raumbelastungen mit dem gleichen Abwasser beschickt (Abwasserbehälter 1). Die für die Abbauleistung charakteristischen Meßergebnisse sind in der nachfolgenden Tabelle einander gegenübergestellt.

Der chemische Sauerstoffbedarf (CSB) wurde in bekannter Weise nach DIN 38 409, Teil 41, und der Anteil der auf Aktivkohle absorbierbaren Chlorkohlenwasserstoffe (AOX-Gehalt) nach DIN 38 409, Teil 14, gemessen. Die Meßwerte lassen erkennen, daß das erfindungsgemäße Verfahren C sowohl hinsichtlich der Abbauleistung (CSB) als auch hinsichtlich der AOX-Elimination überlegen ist.

| Anlage | Tag 44 | | | Tag 65 | | | Tag 90 | | |
|---|---|---|---|---|---|---|---|---|---|
| | A | B | C | A | B | C | A | B | C |
| **CSB (mg/l)** | | | | | | | | | |
| Zulauf | 2150 | 2150 | 2150 | 2380 | 2380 | 2380 | 1780 | 1780 | 1780 |
| Ablauf | 475 | 500 | 458 | 1800 | 1750 | 712 | 1170 | 1210 | 732 |
| % Elimination | 77,9 | 76,7 | 78,7 | 24,4 | 26,5 | 70,1 | 34,3 | 32,0 | 58,9 |
| **AOX (mg/l)** | | | | | | | | | |
| Zulauf | 11,5 | 11,5 | 11,5 | 17,0 | 17,0 | 17,0 | 26,7 | 26,7 | 26,7 |
| Ablauf | 6,2 | 6,14 | 6,36 | 13,4 | 12,7 | 11,9 | 20,6 | 21,5 | 20,0 |
| % Elimination | 45,9 | 46,6 | 44,7 | 21,2 | 25,3 | 30,0 | 22,8 | 19,5 | 25,1 |

EP 0 340 567 B1

## Ansprüche

1. Zweistufiges Verfahren zum biologischen Abbau von komplexen, langsam abbaubaren Abwasserinhaltsstoffen, bei dem in der ersten Stufe eine Ansäuerung und in der zweiten Stufe ein anaerober Abbau in Gegenwart von methanogenen Organismen erfolgt, dadurch gekennzeichnet, daß das zu behandelnde Abwasser in der ersten Stufe neben den acidogenen Organismen mit dehalogenierenden und/oder desulfonierenden und/oder desaminierenden Stämmen angereichert wird, daß in der gleichen Stufe auf die organische Kohlenstoffbelastung bezogen, stark unterstöchiometrische Mengen Sauerstoff direkt oder indirekt durch Zugabe Sauerstoff-abspaltender Verbindungen zudosiert werden.

2. Verfahren nach Anspruch 1, dadurch gekennzeichnet, daß beide Stufen als Wirbelbettverfahren unter Verwendung von Trägerkörpern zur Immobilisierung der Biomasse betrieben werden.

3. Verfahren nach Anspruch 2, dadurch gekennzeichnet, daß als Trägerkörper stückige Polyurethanmassen verwendet werden, die als Füllstoff reaktiv und abriebfest gebundenes Kohlepulver enthalten.

4. Verfahren gemäß Anspruch 1 bis 3, dadurch gekennzeichnet, daß die Sauerstoffkonzentration in der ersten Stufe im Bereich zwischen 0,01 bis 1,2 mg/l, bevorzugt zwischen 0,02 bis 1 mg/l und besonders bevorzugt zwischen 0,05 bis 0,8 mg/l gehalten wird.

5. Verfahren gemäß den Ansprüchen 1 bis 4, dadurch gekennzeichnet, daß der pH-Wert in der ersten Stufe zwischen 2,5 bis 7,5, bevorzugt zwischen 3,0 und 6,8 und besonders bevorzugt zwischen 4,0 und 6,5, eingestellt wird.

## Claims

1. A two-stage process for the biological degradation of complex, non-readily degradable wastewater constituents in which acidification takes place in a first stage and anaerobic degradation in the presence of methanogenic organisms in the second stage, characterized in that, in the first stage, the wastewater to be treated is enriched both with the acidogenic organisms and also with dehalogenating and/or desulfonating and/or deaminating strains and in that highly sub-stoichiometric quantities of oxygen, based on the organic carbon load, are introduced in the same stage either directly or indirectly by addition of oxygen-yielding compounds.

2. A process as claimed in claim 1, characterized in that both stages are operated as fluidized bed processes using supports to immobilize the biomass.

3. A process as claimed in claim 2, characterized in that particulate polyurethane materials filled with carbon powder bound in reactive, abrasion-resistant form are used as the supports.

4. A process as claimed in claims 1 to 3, characterized in that the concentration of oxygen in the first stage is in the range from 0.01 to 1.2 mg/l, preferably in the range from 0.02 to 1 mg/l and more preferably in the range from 0.05 to 0.8 mg/l.

5. A process as claimed in claims 1 to 4, characterized in that the pH value in the first stage is in the range from 2.5 to 7.5, preferably in the range from 3.0 to 6.8 and more preferably in the range from 4.0 to 6.5.

## Revendications

1. Procédé en deux étapes pour la dégradation biologique d'ingrédients d'effluents complexes, à dégradation lente, avec dans la première étape une acidification et dans la seconde étape une dégradation anaérobie en présence d'organismes méthanogènes, caractérisé en ce que l'effluent à traiter est enrichi dans la première étape par des espèces déshalogénantes et/ou désulfonantes et/ou désaminantes outre les organismes acidogènes, que dans la même étape des quantités d'oxygène fortement sous-stoechiométriques par rapport à la charge organique d'hydrocarbures sont ajoutées de manière dosée, directement ou indirectement par apport de composés libérant de l'oxygène.

2. Procédé selon la revendication 1, caractérisé en ce que les deux étapes sont conduites sous forme d'un procédé à lit fluidisé avec utilisation de corps de support pour immobiliser la biomasse.

3. Procédé selon la revendication 2, caractérisé en ce que les corps de support sont des masses de polyuréthanne en morceaux contenant comme charge du charbon en poudre fixé de manière réactive et résistante à l'abrasion.

4. Procédé selon les revendications 1 à 3, caractérisé en ce que la concentration en oxygène dans la première étape est de 0,01 à 1,2 mg/l, de préférence 0,02 à 1 mg/l et de préférence particulière de 0,05 à 0,8 mg/l.

5. Procédé selon les revendications 1 à 4, caractérisé en ce que le pH dans la première étape est réglé à une valeur de 2,5 à 7,5, de préférence 3,0 à 6,8 et de préférence particulière de 4,0 à 6,5.

FIG.1